Europäisches Patentamt

European Patent Office

Office européen des brevets

(19)

(11) Veröffentlichungsnummer: **0 073 320**
**A1**

## EUROPÄISCHE PATENTANMELDUNG

(21) Anmeldenummer: 82106152.0

(22) Anmeldetag: 09.07.82

(51) Int. Cl.³: **F 16 D 65/56**, F 16 D 55/224

(30) Priorität: **12.08.81 DE 3131813**

(43) Veröffentlichungstag der Anmeldung: 09.03.83
**Patentblatt 83/10**

(84) Benannte Vertragsstaaten: **FR GB IT NL SE**

(71) Anmelder: **Bergische Achsenfabrik Fr. Kotz & Söhne, Am Ohlerhammer, D-5276 Wiehl 1 (DE)**

(72) Erfinder: **Brandt, Heinrich, Wülfringhausener Strasse 18, D-5276 Wiehl 1 (DE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11 (DE)**

(54) Betätigungs- und Nachstellvorrichtung für eine Teilbelag-Scheibenbremse.

(57) Die Erfindung betrifft eine Betätigungsvorrichtung für eine Teilbelag-Scheibenbremse für Kraftfahrzeuge oder Anhänger. Um auch mit kurzem Hub und kurzen Bremshebeln eine große Übersetzung mit proportionalem Anstieg der Zuspannkraft zu erzielen, wird vorgeschlagen, die Bremshebel (19) in mit dem äußeren Bremsbackenträger (9) verbundenen Konsolen auf Lagerbolzen (20) verschwenkbar zu lagern und exzentrisch dazu in jedem Bremshebel (19) eine Zylinderrolle (21) anzuordnen, welche einer im Zuganker (6) angeordneten Nachstellschraube (17) anliegt. Zum automatischen Nachstellen der Nachstellschraube (17) wird ein auf dem Zuganker (6) angeordnetes Klemmstück (26) benutzt, welches mit Führungsstiften (27) in an den Bremshebeln (19) angeordnete Kulissen (28) eingreift. Über die Formgestaltung der Kulissen (28) wird eine dem Bremsbelagverschleiß entsprechende Relativverschiebung des Klemmstückes (26) zum Zuganker (6) und gleichzeitig eine automatische Nachstellung der Nachstellschraube (17) bewirkt.

EP 0 073 320 A1

- 1 -

Betätigungs- und Nachstellvorrichtung
für eine Teilbelag-Scheibenbremse

Die Erfindung betrifft eine Betätigungs- und Nachstellvorrichtung für eine Teilbelag-Scheibenbremse für Kraftfahrzeuge oder Anhänger, deren Bremsbacken beiderseits einer Bremsscheibe angeordnet und auf am Achskörper in der Ebene der Bremsscheibe befestigten Trägern angeordneten, rohrförmigen Lagerbolzen verschiebbar gelagert sind und mit die Lagerbolzen durchgreifenden Zugstangen betätigt werden, die sich mit einem Ende an einem inneren Bremsbackenträger abstützen und am anderen Ende mit je einem Bremshebel zusammenwirken, der um eine parallel zu dem äußeren Bremsbackenträger verlaufende Achse verschwenkbar gelagert ist und in dem exzentrisch zu den Lagerstellen eine Zylinderrolle gelagert ist.

Aus der DE-OS 24 48 787 ist eine Betätigungsvorrichtung für eine Teilbelag-Scheibenbremse bekannt, bei der die Bremshebel mit einem Innengewinde versehen und auf den mit einem Außengewinde versehenen Zugstangen angeordnet sind. Zur Betätigung sind zwischen den beiden Bremshebeln eine Spreizvorrichtung und eine

- 2 -

Rückholfeder eingeschaltet. Diese bekannte Betätigungsvorrichtung funktioniert zwar zufriedenstellend, benötigt aber verhältnismäßig große Verstellwege an der Spreizvorrichtung, die bei Bremsen für kleinere Raddurchmesser nicht zur Verfügung stehen. Außerdem kann bei der bekannten Betätigungsvorrichtung zwar jeder Bremshebel mit einer aus einer Schnecke und einem Schneckenrad bestehenden Nachstellvorrichtung ausgestattet sein, diese gleicht aber den Bremsbelagverschleiß nicht automatisch aus, sondern muß noch von Hand nachgestellt werden.

Aus den beiden weiteren DE-OS 27 41 093 und 29 02 796 sind Teilbelag-Scheibenbremsen der hier vorliegenden Gattung bekannt, bei der die Bremsscheiben auf zwei in einem am Achskörper in der Ebene der Bremsscheibe befestigten Träger angeordneten, rohrförmigen Lagerbolzen verschiebbar gelagert sind und mit in den Lagerbolzen angeordneten Zugstangen betätigt werden, die sich mit einem Ende direkt an einer Bremsbacke abstützen und am anderen Ende mit je einem Bremshebel zusammenwirken, wobei jeder Bremshebel an einer an der Zugstange befestigten Zugmutter gelagert ist. Die zweiarmig ausgebildeten Bremshebel müssen verhältnismäßig lang sein und besitzen einen evolventenartig geformten Nocken, um bei dem zur Verfügung stehenden kurzen Hub eine ausreichend große Übersetzung und einen proportionalen Anstieg der Zuspannkraft zu bewirken. Bei dieser bekannten Betätigungsvorrichtung müssen die Bremshebel als Verschleißteile von Zeit zu Zeit ausgetauscht werden.

Die aus der DE-OS 27 41 093 bekannte Nachstellvorrichtung besteht aus einem zwischen dem Nocken des Bremshebels und der äußeren Bremsbacke gegen eine Druckfeder

- 3 -

verschiebbar auf der Zugmutter gelagerten Nachstellring, der mit radial zustellbaren und in an der inneren
Stirnwand des Nachstellringes stufenförmig angeordnete
Andrehungen mit Druckfedern einrastbaren Nachstellgliedern zusammenwirkt. Diese Nachstellvorrichtung hat
zwar schon den Vorteil, daß sie mit sehr kleinen Betätigungswegen auskommt und eine automatische Nachstellung zum Ausgleich des Bremsbelagverschleißes besitzt, aber die Nachstellung kann nur stufenweise erfolgen. Die aus der anderen DE-OS 29 02 796 bekannte
Nachstellvorrichtung besteht aus einem zwischen dem
Nocken jedes Bremshebels und der äußeren Bremsbacke
axial verstellbaren Nachstellbolzen und einem drehbaren Nachstellkörper, die über Schrägflächen zusammenwirken. Diese Nachstellvorrichtung hat den Vorteil,
daß sie automatisch und stufenlos arbeitet, aber da zur
Nachstellung zwischen jedem Nachstellkörper und der äußeren Bremsbacke eine vorgespannte Spiralfeder angeordnet ist, deren Enden am Nachstellkörper bzw. an der
äußeren Bremsbacke befestigt sind, ist die Funktionssicherheit bei einem Bruch der Spiralfeder nicht mehr
gewährleistet.

Schließlich ist aus der DE-OS 27 30 963 noch eine Scheibenbremse für Fahrzeuge bekannt, bei welcher der Bremshebel im äußeren Bremsbackenträger schwenkbar gelagert
ist. Weitere Übereinstimmungen mit dem Gegenstand der
vorliegenden Erfindung sind bei diesem Stand der Technik nicht vorhanden.

Ausgehend von diesem Stand der Technik liegt der Erfindung die A u f g a b e  zugrunde, eine Betätigungsvorrichtung für eine Teilbelag-Scheibenbremse zu
schaffen, die symmetrisch zum Achskörper angeordnet wer-

0073320

- 4 -

den kann und auch bei kurzem Hub der Bremshebel noch eine große Übersetzung mit proportionalem Anstieg der Zuspannkraft besitzt. Eine w e i t e r e A u f - g a b e besteht darin, für diese Betätigungsvorrichtung eine einfach konstruierte, automatisch und stufenlos arbeitende Nachstellvorrichtung zum Ausgleich des Bremsbelagverschleißes zu schaffen.

Für eine Betätigungsvorrichtung der eingangs beschriebenen Gattung werden zur L ö s u n g dieser Aufgabe folgende Merkmale vorgeschlagen:

a) die Bremshebel sind in mit dem äußeren Bremsbackenträger verbundenen Konsolen auf Lagerbolzen verschwenkbar gelagert;

b) das äußere Ende jeder Zugstange ist als Gabel ausgebildet und umgreift die Zylinderrolle mit ihren Schenkeln;

c) die Schenkel der Zugstangen sind durch einen Gewindekopf miteinander verbunden;

d) in jedem Gewindekopf ist eine der Zylinderrolle anliegende Nachstellschraube angeordnet;

e) zwischen der Zylinderrolle und dem Gewindekopf befindet sich ein auf den Schenkeln der Zugstangen verschiebbares Klemmstück;

f) die Klemmstücke greifen mit Führungsstiften in Kulissen der Bremshebel ein und

g) die Kulissen sind für das notwendige Lüftspiel

- 5 -

im Bereich eines Winkels $\alpha$ auf einem Kreisbogen um die Drehachse der Zylinderrolle und für die Nachstellung im Bereich eines Winkels ß auf einem Kreisbogen um die Mittelachse der Lagerbolzen gekrümmt.

Bei einer praktischen Ausführungsform können die einarmigen Bremshebel gabelförmig ausgebildet sein und an den Innenseiten ihrer Hebelarme mit Ausnehmungen für den Eingriff der Zylinderrollen versehen sein, während die Nachstellschraube im Bereich des Klemmstückes mit der Verzahnung versehen ist, in die ein im Klemmstück gelagertes Sperrglied unter Federdruck eingreift.

Eine erfindungsgemäß ausgebildete Betätigungsvorrichtung hat den Vorteil, daß sie eine symmetrische Anordnung der Bremsbrücken beiderseits des Achskörpers ermöglicht, weil durch die Exzentrizität zwischen den Lagerbolzen und Zylinderrollen auch bei sehr kurzem Bremshebel und kleinem Hub immer noch eine ausreichend große Übersetzung erreicht wird. Ein weiterer Vorteil besteht darin, daß durch die erfindungsgemäße Konstruktion eine dem Bremsdruck unmittelbar proportionale Zuspannkraft auf die Bremsbacken übertragen wird.

Die Nachstellung der Nachstellschraube zum Ausgleich des Bremsbelagverschleisses kann bei einer vereinfachten Ausführungsform von Hand erfolgen, wenn zwischen dem inneren Ende der Nachstellschraube und der Zylinderrolle ein dem Bremsbelagverschleiß entsprechender Luftspalt vorhanden ist. Nach einem weiteren Merkmal der Erfindung wird zur L ö s u n g der zweiten Teilaufgabe eine automatische Nachstellung für die Nachstellschraube vorgeschlagen, die aus einem in einer

- 6 -

tangential zur Nachstellschraube verlaufende Nut des Klemmstückes verschiebbar angeordneten Mitnehmer besteht, der mit einem im Bremshebel befestigten Nachstellstift zusammenwirkt.

Bei einer praktischen Ausführungsform kann der Mitnehmer an seiner Innenseite eine Verzahnung besitzen, welche mit der Verzahnung der Nachstellschraube nach Art einer Klinkenschaltung zusammenarbeitet. Der Mitnehmer wird zweckmäßig von einer Feder in seine Ausgangslage zurückgezogen und von einer weiteren Feder in die Verzahnung der Nachstellschraube hineingedrückt.

Für die Funktion dieser automatischen Nachstellvorrichtung ist es wichtig, daß das Klemmstück bei der Nachstellung nicht auf den Schenkeln des Zugankers verschoben wird. Deshalb wird vorgeschlagen, auf den Schenkeln der Zugstange einen Reibbelag und in dem Klemmstück unter Federdruck stehende Klemmhülsen anzuordnen, welche das Klemmstück auf den Schenkeln der Zugstange verspannen.

Eine nach dieser technischen Lehre ausgebildete Nachstellvorrichtung ist sehr einfach konstruiert und bewirkt einen automatischen Ausgleich des Bremsbelagverschleisses.

Weitere Einzelheiten des Gegenstandes der Erfindung ergeben sich aus der nachfolgenden Beschreibung der zugehörigen Zeichnungen, in denen ein bevorzugtes Ausführungsbeispiel einer erfindungsgemäß ausgebildeten Betätigungsvorrichtung mit einer automatischen Nachstellvorrichtung schematisch dargestellt ist. In den Zeichnungen zeigen:

0073320

- 7 -

| | |
|---|---|
| Fig. 1 | eine Teilbelag-Scheibenbremse in Ansicht von der Innenseite; |
| Fig. 2 | dieselbe Teilbelag-Scheibenbremse in Draufsicht; |
| Fig. 3 | dieselbe Teilbelag-Scheibenbremse entlang der Linie III-III in Fig. 1 geschnitten in Draufsicht in einem vergrößerten Maßstab; |
| Fig. 4 | einen Ausschnitt aus Fig. 3 entlang der Linie IV-IV geschnitten; |
| Fig. 5 | einen Ausschnitt aus Fig. 4 entlang der Linie V-V geschnitten; |
| Fig. 6 | einen Ausschnitt aus Fig. 5 entlang der Linie VI-VI geschnitten; |
| Fig. 7 | einen Ausschnitt aus Fig. 5 entlang der Linie VII-VII geschnitten; |
| Figuren 8 bis 12 | einen Ausschnitt aus Fig. 5 zur Veranschaulichung der Nachstellvorrichtung und ihrer verschiedenen Betriebsstellungen. |

An einem Achskörper 1 ist eine Radnabe 2 gelagert, an der eine mit Fenstern 3 versehene, trommelförmige Bremsscheibe 4 mit Schrauben befestigt ist. Die Radnabe 2 ist in bekannter Weise am Achskörper 1 gelagert, so daß auf die Darstellung der Lagerung verzichtet werden kann.

Die Betätigungs- und Nachstellvorrichtung für die dargestellte Teilbelag-Scheibenbremse besteht aus zwei symmetrischen Anordnungen, welche beiderseits des Achskörpers 1 angeordnet sind und gemeinsam die Bremswirkung erzeugen, so daß die nachstehende Beschreibung einer Anordnung zum Verständnis der Erfindung ausreicht.

In der Ebene der Bremsscheibe 4 ist am Achskörper 1 ein Träger 5 angeschweißt, in dem zwei Zuganker 6 in rohrförmigen Lagerbolzen 7 verschiebbar angeordnet sind. Die Lagerbolzen 7 sind in den Träger 5 eingepreßt. Auf den Lagerbolzen 7 sind ein innerer Bremsbackenträger 8 und ein äußerer Bremsbackenträger 9 verschiebbar angeordnet, an denen Bremsbacken 10 mit Bremsbelägen 11 mittels Bolzen 12 um die Vertikalebene beweglich gelagert sind.

Das innere Ende jedes Zugankers 6 ist mit einem Gewinde 13 versehen und über einen Gewindeflansch 14 mit dem inneren Bremsbackenträger 8 fest verbunden.

Der äußere Teil jedes Zugankers 6 ist gabelförmig ausgebildet und besitzt zwei Schenkel 15, die am äußeren Ende über einen Gewindekopf 16 miteinander verbunden sind. In dem Gewindekopf 16 ist eine Nachstellschraube 17 drehbar angeordnet.

An dem äußeren Bremsbackenträger 9 sind Konsolen 18 für die Lagerung von Bremshebeln 19 befestigt. Jeder Bremshebel 19 ist gabelförmig ausgebildet und mit Lagerbolzen 20 in den Konsolen 18 gelagert. Die Schenkel der Bremshebel 19 umgreifen das gabelförmige Ende des Zugankers 6 und besitzen im Bereich zwischen den Schenkeln 15 des Zugankers 6 Ausnehmungen für die Aufnahme einer Zylinderrolle 21. Die Mittelachse der Zylinderrolle 21 ist im Verhältnis zur Drehachse der Bremshebel 19 um die Lagerbolzen 20 zum Betätigungsende hin exzentrisch versetzt angeordnet. An ihrem freien Ende sind die Bremshebel 19 über Druckstücke 22 mit einem Kolben 23 eines am äußeren Bremsbackenträger 9 befestigten Bremszylinders 24 verbunden. Eine Rückholfeder 25 zieht die Bremshebel 19 in ihre Ausgangsstellung zurück.

Zwischen dem Gewindekopf 16 und der Zylinderrolle 21 ist auf den Schenkeln 15 des Zugankers 6 ein Klemmstück 26 verschiebbar angeordnet, welches die Nachstellschraube 17 umgreift und zwischen den beiden Schenkeln des Bremshebels 19 liegt. In dem Klemmstück 26 sind Führungsstifte 27 befestigt, die in Kulissen 28 des Bremshebels 19 eingreifen. Die Kulissen 28 bestehen aus gegeneinander abgewinkelten Kreisbögen, wobei der erste Kreisbogen im Bereich eines Winkels $\alpha$ seinen Mittelpunkt in der durch die Zylinderrolle 21 definierten Drehachse des Bremshebels 19 hat, während der zweite Kreisbogen im Bereich eines Winkels $\beta$ seinen Mittelpunkt in der Mittelachse der Lagerbolzen 20 hat. Beim Verschwenken des Bremshebels 19 um den Winkel $\alpha$ wird zunächst das Lüftspiel zwischen der Bremsscheibe 4 und den Bremsbelägen 11 überbrückt. Beim weiteren Verschwenken des Bremshebels 19 in den Bereich des Winkels $\beta$ hinein beginnt der Bremsvorgang.

Im Bereich des Klemmstückes 26 besitzt die Nachstellschraube 17 eine Verzahnung 29, in die ein im Klemmstück 26 gelagertes Sperrglied 30 unter der Wirkung einer Feder 31 eingreift.

Auf der dem Sperrglied 30 gegenüberliegenden Seite besitzt das Klemmstück 26 für die Unterbringung einer automatischen Nachstellvorrichtung eine tangential zur Nachstellschraube 17 verlaufende Nut 32, in der ein Mitnehmer 33 verschiebbar angeordnet ist. Der Mitnehmer arbeitet mit einem im Bremshebel 19 befestigten Nachstellstift 34 zusammen, der in eine rückwärtige Ausnehmung eingreift und kämmt gleichzeitig mit der Verzahnung 29 an der Nachstellschraube 17. Durch Federn 35, 36 wird der Mitnehmer 33 in die Verzahnung hineingedrückt und in seine Ausgangslage zurückgezogen.

Damit das Klemmstück 26 sich nicht unbeabsichtigt auf den Schenkeln 15 des Zugankers 6 verschieben kann, sind Reibbeläge 37 und unter Federdruck stehende Klemmhülsen 38 vorgesehen.

Die Wirkungsweise der beschriebenen Teilbelag-Scheibenbremse ist sehr einfach. Wenn dem Bremszylinder 24 ein Druckmedium zugeführt wird, verschwenkt der Kolben 23 den Bremshebel 19 um die Lagerbolzen 20. Da die Zylinderrolle 21 exzentrisch zu den Lagerbolzen 20 angeordnet ist, zieht der Bremshebel 19 über die Zylinderrolle 21 und die Nachstellschraube 17 an dem Zuganker 6 mit der Folge, daß die inneren und äußeren Bremsbackenträger 8, 9 gegeneinander verspannt werden und die Bremsbeläge 11 an der Bremsscheibe 4 zur Anlage kommen. Die bewegliche Aufhängung der Bremsbacken 10 mit den Bolzen 12 an den beiden Bremsbackenträgern 8, 9 sorgt dafür, daß die Bremsbeläge 11 auch bei Durchbiegungen der Übertragungsteile immer plan an der Bremsscheibe 4 zur Anlage kommen. Dadurch werden Kantenpressungen vermieden.

- 11 -

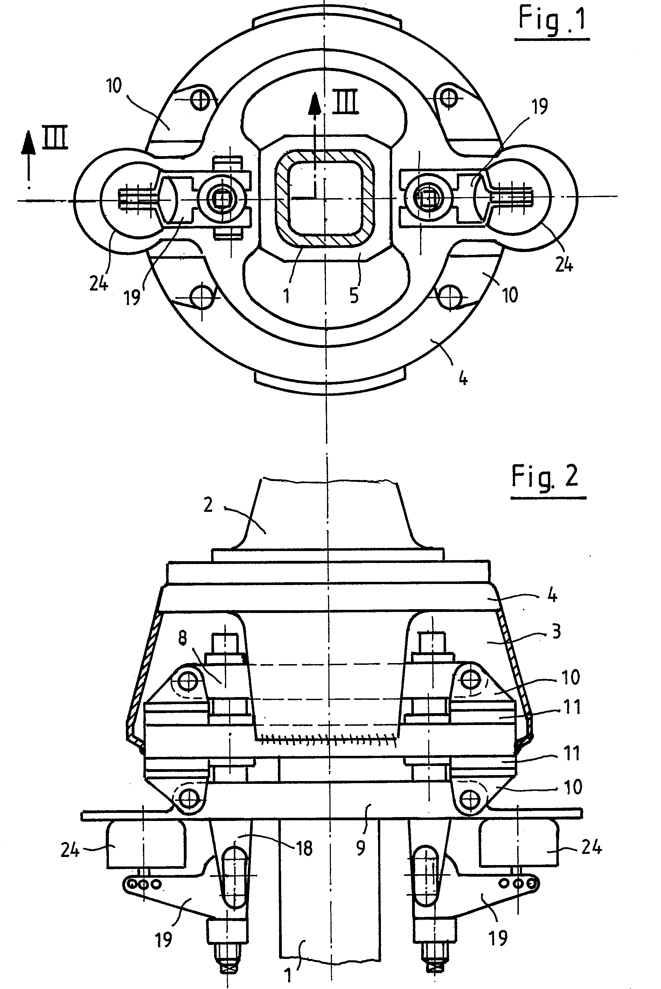

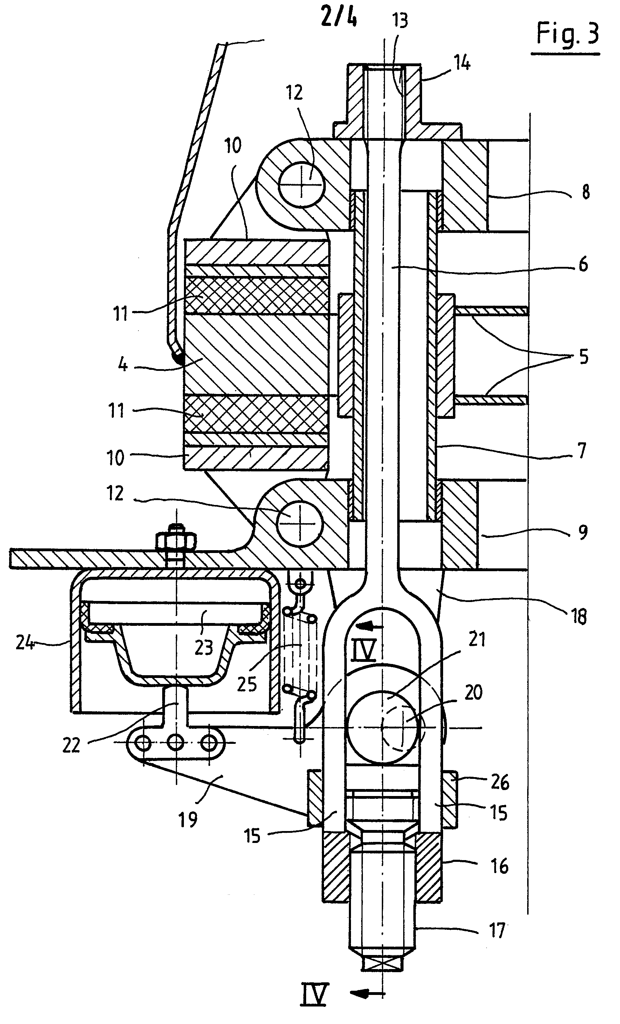

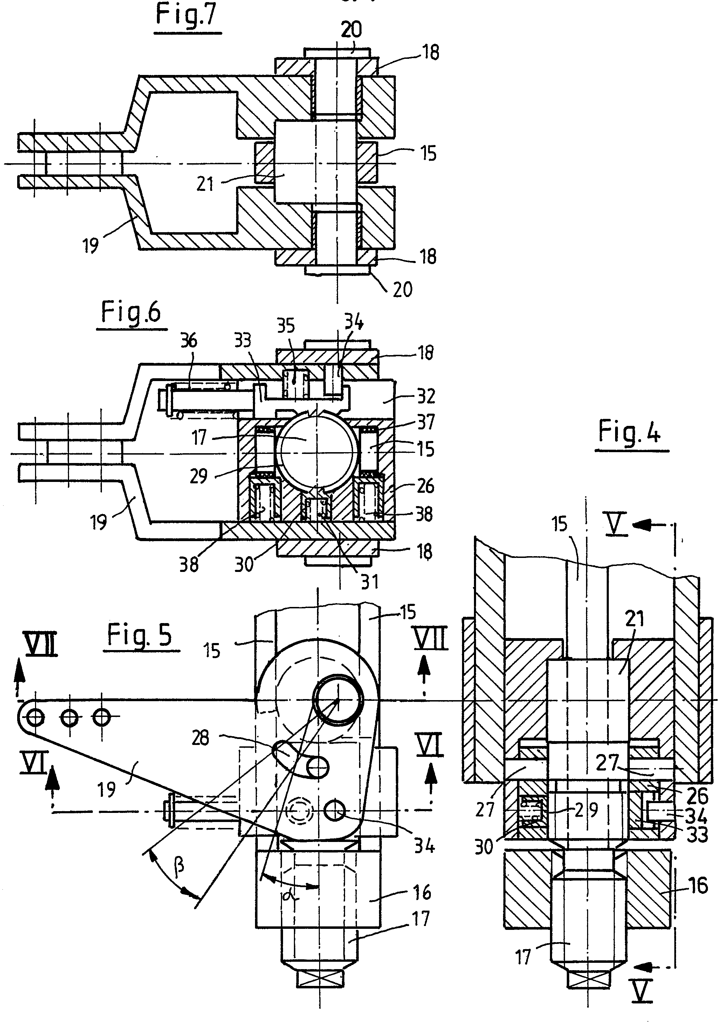

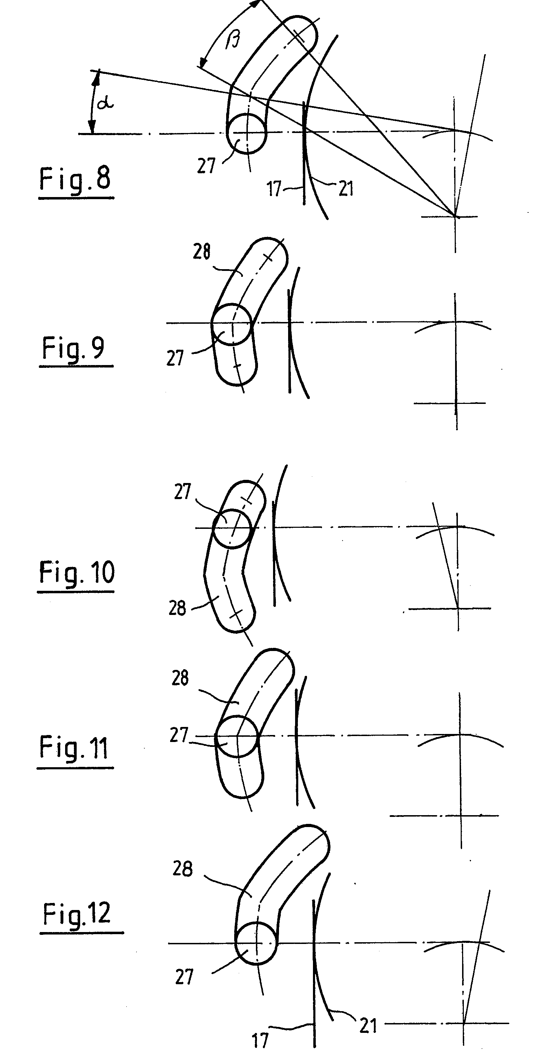

Solange kein Bremsbelagverschleiß auftritt und nur das Lüftspiel im Bereich des Winkels α der Kulissen 28 überbrückt werden muß, bewegen sich die Führungsstifte 27 im Klemmstück 26 mit der Zylinderrolle 21 und der Nachstellschraube 17 ohne Relativbewegung. Dieser Schwenkbereich ist in den Fig. 8 und 9 dargestellt worden.

Wenn nach einiger Zeit ein Verschleiß der Bremsbeläge 11 eintritt, können die Bremshebel 19 weiter verschwenkt werden, bis die Führungsstifte 27 in den Bereich des Winkels ß der Kulissen 28 eintreten. In diesem Schwenkbereich hat der Krümmungsradius der Kulissen 28 seinen Mittelpunkt in der Mittelachse der Lagerbolzen 20. Dadurch wird das Klemmstück 26 mit den Führungsstiften 27 auf den Schenkeln 15 des Zugankers 6 proportional zum Bremsbelagverschleiß verschoben. Diese Relativlage zwischen den Führungsstiften 27 und den Kulissen 28 ist in der Fig. 10 dargestellt.

Nach Beendigung des Bremsvorganges werden die Bremshebel 19 von den Rückholfedern 25 in ihre Ausgangslage zurückgezogen. Dabei löst sich die Zylinderrolle 21 vom inneren Ende der Nachstellschraube 17. Gleichzeitig kann der vom Nachstellstift 34 mitgenommene Mitnehmer 33 einen oder mehrere Zähne der Verzahnung 29 an der Nachstellschraube 17 überspringen und diese beim Rückhub um einen dem eingetretenen Bremsbelagverschleiß entsprechenden Betrag nachstellen. Die Nachstellung endet, wenn die Nachstellstifte 34 in den Bereich des Winkels α der Kulissen 28 eintreten, wie es in den Fig. 11 und 12 dargestellt worden ist, damit sich das normale Lüftspiel der Bremse wieder einstellen kann.

Damit das Klemmstück 26 nicht durch die Nachstellung der Nachstellschraube 17 unbeabsichtigt auf den Schenkeln 15 des Zugankers 6 verschoben wird, muß dafür Sorge getragen werden, daß die Nachstellkraft immer etwas kleiner ist, als die Klemmkraft zwischen dem Klemmstück 26 und den Schenkeln 15 des Zugankers 6.

Ein Zurückstellen der Nachstellschraube 17 wird durch das in die Verzahnung 29 eingreifende Sperrglied 30 verhindert.

## Bezugszeichenliste

| | | | |
|---|---|---|---|
| 1 | Achskörper | 20 | Lagerbolzen |
| 2 | Radnabe | 21 | Zylinderrolle |
| 3 | Fenster | 22 | Druckstück |
| 4 | Bremsscheibe | 23 | Kolben |
| 5 | Träger | 24 | Bremszylinder |
| 6 | Zuganker | 25 | Rückholfeder |
| 7 | Lagerbolzen | 26 | Klemmstück |
| 8 | Bremsbackenträger (innerer) | 27 | Führungsstift |
| 9 | Bremsbackenträger (äußerer) | 28 | Kulisse |
| 10 | Bremsbacke | 29 | Verzahnung |
| 11 | Bremsbelag | 30 | Sperrglied |
| 12 | Bolzen | 31 | Feder |
| 13 | Gewinde | 32 | Nut |
| 14 | Gewindeflansch | 33 | Mitnehmer |
| 15 | Schenkel | 34 | Nachstellstift |
| 16 | Gewindekopf | 35 | Feder |
| 17 | Nachstellschraube | 36 | Feder |
| 18 | Konsole | 37 | Reibbelag |
| 19 | Bremshebel | 38 | Klemmhülsen |

0073320

- 14 -

A n s p r ü c h e :

1. Betätigungsvorrichtung mit automatischer Nachstellung für eine Teilbelag-Scheibenbremse für Kraftfahrzeuge oder Anhänger, deren Bremsbacken beiderseits einer Bremsscheibe angeordnet und auf am Achskörper in der Ebene der Bremsscheibe befestigten Trägern angeordneten, rohrförmigen Lagerbolzen verschiebbar gelagert sind und mit die Lagerbolzen durchgreifenden Zugstangen betätigt werden, die sich mit einem Ende an einem inneren Bremsbackenträger abstützen und am anderen Ende mit je einem Bremshebel zusammenwirken, der um eine parallel zu dem äußeren Bremsbackenträger verlaufende Achse verschwenkbar gelagert ist und in dem exzentrisch zu den Lagerstellen eine Zylinderrolle gelagert ist, d a d u r c h   g e k e n n z e i c h n e t , daß die Bremshebel (19) in mit dem äußeren Bremsbackenträger (9) verbundenen Konsolen (18) auf Lagerbolzen (20) verschwenkbar gelagert sind, daß das äußere Ende jeder Zugstange (6) als Gabel ausgebildet ist und die Zylinderrolle (21) mit ihren Schenkeln (15) umgreift, daß die Schenkel (15) der Zugstangen (6) durch einen Gewindekopf (16) miteinander verbunden sind, daß in jedem Gewindekopf (16) eine der Zylinderrolle (21) anliegende Nachstellschraube (17) angeordnet ist, daß zwischen der Zylinderrolle (21) und dem Gewindekopf (16) ein Klemmstück (26) verschiebbar auf den Schenkeln (15) der Zugstange (6) angeordnet ist, daß die Klemmstücke (26) mit Führungsstiften (27) in Kulissen (28) der Bremshebel (19) eingreifen und

daß die Kulissen (28) für das Lüftspiel im Bereich eines Winkels $\alpha$ auf einem Kreisbogen um die Drehachse der Zylinderrolle (21) und für die Nachstellung im Bereich eines Winkels ß auf dem Kreisbogen um die Mittelachsen der Lagerbolzen (20) gekrümmt sind.

2. Betätigungsvorrichtung nach Anspruch 1, dadurch gekennzeichnet, daß die Bremshebel (19) gabelförmig ausgebildet und an den Innenseiten ihrer Hebelarme mit Ausnehmungen für den Eingriff der Zylinderrolle (21) versehen sind.

3. Betätigungsvorrichtung nach den Ansprüchen 1 und 2, dadurch gekennzeichnet, daß die Nachstellschraube (17) im Bereich des Klemmstückes (26) mit einer Verzahnung (29) versehen ist, in die ein im Klemmstück (26) gelagertes Sperrglied (30) unter Federdruck eingreift.

4. Betätigungsvorrichtung nach den Ansprüchen 1 bis 3 mit einer automatischen Nachstellung für die Nachstellschraube (17),
g e k e n n z e i c h n e t   d u r c h
einen in einer tangential zur Nachstellschraube (17) verlaufenden Nut (32) des Klemmstückes (26) verschiebbar angeordneten Mitnehmer (33), der mit einem im Bremshebel (19) befestigten Nachstellstift (34) zusammenwirkt.

5. Betätigungsvorrichtung nach Anspruch 4, dadurch gekennzeichnet, daß der Mitnehmer (33) an seiner Innenseite eine Verzahnung besitzt, welche mit der Verzahnung (29) der Nachstellschraube (17) nach

- 16 -

Art einer Klinkenschaltung zusammenwirkt.

6. Betätigungsvorrichtung nach den Ansprüchen 4 und 5, dadurch gekennzeichnet, daß der Mitnehmer (33) von einer Feder (36) in seine Ausgangslage zurückgezogen und von einer weiteren Feder (35) in die Verzahnung (29) der Nachstellschraube (17) hineingedrückt wird.

7. Betätigungsvorrichtung nach den Ansprüchen 4 bis 6, dadurch gekennzeichnet, daß zwischen den Schenkeln (15) der Zugstange (6) und dem Klemmstück (26) ein Reibbelag (37) angeordnet ist.

8. Betätigungsvorrichtung nach Anspruch 7, dadurch gekennzeichnet, daß in dem Klemmstück (26) unter Federdruck stehende Klemmhülsen (38) angeordnet sind, welche den Schenkeln (15) der Zugstange (6) anliegen.

1/4

Fig.1

Fig. 2

0073320

Fig. 3

Fig.7

Fig.6

Fig.4

Fig.5

0073320

Fig.8

Fig.9

Fig.10

Fig.11

Fig.12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | F 16 D 65/56 |
| D,A | EP-A-0 001 045 (BERGISCHE ACHSENFABRIK) * Seite 5, Zeile 2 - Seite 6, Zeile 12; Figuren 1-4 * | 1 | F 16 D 55/224 |
| A | --- DE-B-1 206 224 (DUNLOP) * Spalte 3, Zeile 28 - Spalte 4, Zeile 49; Figuren 1-5 * | 1-6 | |
| A | --- DE-B-1 480 038 (S.A.B.) * Spalte 4, Zeilen 39-68; Spalte 5, Zeile 50 - Spalte 6, Zeile 29; Figuren 3-7 * | 1,4-6 | |
| A | --- DE-B-1 235 686 (DUNLOP) * Insgesamt * | 1-3 | |
| | | | **RECHERCHIERTE SACHGEBIETE (Int. Cl. ³)** |
| A | --- FR-A-2 438 200 (FIAT-ALLIS) * Seite 8, Zeile 8 - Seite 11, Zeile 30; Figuren 1-5 * | 1,3 | F 16 D |
| A | --- US-A-3 473 632 (JUN KIMURA) * Spalte 4, Zeile 23 - Spalte 5, Zeile 11; Figuren 1-4 * | 1,3 | |
| A | --- GB-A-1 001 514 (DUNLOP) * Insgesamt * | 1-3 | |
| A | --- DE-B-1 182 911 (TEVES) * Insgesamt * | 1,2 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 07-12-1982 | KIESLINGER J |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-3 392 806 (KNAPP) <br> * Insgesamt * | 1,3 | |
| A | DE-A-1 530 617 (DUNLOP) <br> * Seite 8, Absatz 2 - Seite 9, Absatz 2; Figuren 1,2 * | 1,7 | |
| A | DE-A-1 600 140 (TEVES) <br> * Seite 4, Zeilen 4-10; Figuren * | 1 | |
| A | DE-A-1 475 516 (WESTINGHOUSE) <br> * Figuren 8,9 * | 3-6,8 | |
| D,A | EP-A-0 014 320 (BERGISCHE ACHSEN FABRIK) | | |
| D,A | GB-A-1 566 355 (WAGNER ELECTRIC) | | RECHERCHIERTE SACHGEBIETE (Int. Cl. 3) |
| D,A | FR-A-2 252 506 (BERGISCHE ACHSENFABRIK) | | |

Der vorliegende Recherchenbericht wurde für alle Patentansprüche erstellt.

| Recherchenort <br> DEN HAAG | Abschlußdatum der Recherche <br> 07-12-1982 | Prüfer <br> KIESLINGER J |
|---|---|---|